# EUROPÄISCHE PATENTSCHRIFT

(11) **EP 2 049 941 B1**
(45) Veröffentlichungstag und Bekanntmachung des Hinweises auf die Patenterteilung: **26.05.2010**
(21) Anmeldenummer: 07802552.5
(22) Anmeldetag: 09.08.2007
(51) Int. Cl.: G02F 1/13357, F21S 8/00

(54) **LEUCHTE**
LAMP
DISPOSITIF D'ÉCLAIRAGE

(30) Priorität: 11.08.2006 DE 102006037896
(43) Veröffentlichungstag der Anmeldung: 22.04.2009
(73) Patentinhaber: Osram Gesellschaft mit beschränkter Haftung, 81543 München (DE)
(72) Erfinder: BIEBEL, Ulrich, 86643 Rennertshofen (DE); KNOLL, Matthias, 86159 Augsburg (DE); KONRAD, Armin, 86845 Grossaitingen (DE); ZACHAU, Martin, 82269 Geltendorf (DE)
(86) Internationale Anmeldenummer: PCT/EP2007/058259
(87) Internationale Veröffentlichungsnummer: WO 2008/017701

(56) Entgegenhaltungen:
- WO-A-03/059013
- US-A- 5 143 433
- US-A1- 2004 264 212
- US-A1- 2005 007 025

## Beschreibung

Die Erfindung betrifft eine Leuchte gemäß dem Anspruch 1. Insbesondere handelt es sich um eine Leuchte für eine Display-Hinterleuchtungsvorrichtung.

Die US 5,143,433 offenbart ein Hintergrundbeleuchtungssystem für Flüssigkristall-Displays. Die US 2004/264212 beschreibt ein Flüssigkristall-Display-Modul, das Leuchtstofflampen und eine Vielzahl von zwischen den Leuchtstofflampen angeordneten Leuchtdioden als Lichtquellen besitzt. Die US 2005/007025 offenbart eine Leuchte mit einem LED-Array und einer Glühlampe als Lichtquellen. Die WO 03/059013 offenbart eine Lampe mit einem Sockel und mehreren LED-Elementen, die mit Abstand zum Sockel angeordnet und zu einer Baueinheit zusammengefasst sind.

### I. Darstellung der Erfindung

Es ist Aufgabe der Erfindung, eine Leuchte hoher Effizienz und mit einem breiten Lichtfarbspektrum bereitzustellen, die für großflächige Anwendungen tauglich ist. Insbesondere soll die Leuchte für Display-Hinterleuchtung geeignet sein.

Diese Aufgabe wird erfindungsgemäß durch die Merkmale des Anspruchs 1 gelöst. Besonders vorteilhafte Ausführungen der Erfindung sind in den abhängigen Ansprüchen beschrieben.

Die erfindungsgemäße Leuchte umfasst mindestens eine Leuchtstofflampe und mindestens eine Leuchtdiodenanordnung, wobei die mindestens eine Leuchtdiodenanordnung optisch derart an die mindestens eine Leuchtstofflampe gekoppelt ist, dass das von der mindestens einen Leuchtdiodenanordnung erzeugte Licht in die mindestens eine Leuchtstofflampe eingestrahlt wird. Dadurch wird eine Leuchte geschaffen, die optimal an die Anforderungen für die Verwendung als Display-Hinterleuchtung angepasst ist. Insbesondere wird mittels der mindestens einen Leuchtstofflampe eine effiziente Lichtquelle mit hoher Lichtausbeute und großflächiger Ausleuchtung bereitgestellt, und mittels der mindestens einen Leuchtdiodenanordnung kann die Farbtemperatur oder die Farbe des von der mindestens einen Leuchtstofflampe generierten Lichts auf einfache Weise an die Anforderungen der Displays angepasst werden. Durch die erfindungsgemäße relative Anordnung von Leuchtstofflampe und Leuchtdiodenanordnung wird das von der mindestens einen Leuchtdiodenanordnung generierte Licht in das Lampengefäß der mindestens einen Leuchtstofflampe eingestrahlt, so dass durch Streuung an der auf der Innenseite des Lampengefäßes angebrachten Leuchtstoffbeschichtung eine nahezu homogene Mischung des von der Leuchtstofflampe und der Leuchtdiodenanordnung erzeugten Lichts stattfindet und die erfindungsgemäße Leuchte eine homogene Mischung von Leuchtstofflampen- und Leuchtdiodenlicht emittiert, wobei die mindestens eine Leuchtstofflampe eine großflächige Ausleuchtung mit hoher Lichtausbeute gewährleistet und die mindestens eine Leuchtdiodenanordnung eine einfache Anpassung bzw. Variation der Farbtemperatur oder Farbe des von der Leuchte ausgesandten Lichts ermöglicht. Durch eine Helligkeitsregelung der mindestens einen Leuchtstofflampe oder bzw. und der Leuchtdioden der mindestens einen Leuchtdiodenanordnung kann die Farbtemperatur oder die Farbe des Lichts verändert werden.

Besonders vorteilhaft ist die Verwendung von Leuchtstofflampen, die während des Betriebs weißes Licht, beispielsweise tageslichtartiges weißes Licht, das heißt, mit einer Farbtemperatur im Bereich von ca. 5400 Kelvin bis 6000 Kelvin erzeugen, in Kombination mit Leuchtdiodenanordnungen, die verschiedenfarbige Leuchtdioden umfassen, beispielsweise eine Kombination von rot leuchtenden Leuchtdioden mit grün leuchtenden Leuchtdioden oder von rot, grün und blau leuchtenden Leuchtdioden. Durch das Kombinieren von rot leuchtenden Leuchtdioden mit grün leuchtenden Leuchtdioden kann auf einfache und effiziente Weise die Farbtemperatur des von der mindestens einen Leuchtstofflampe erzeugten weißen Lichts variiert werden, so dass die Leuchte weißes Licht mit einer einstellbaren Farbtemperatur im Bereich von ca. 2700 Kelvin bis 6000 Kelvin emittiert. Durch das Kombinieren von rot leuchtenden Leuchtdioden mit grün leuchtenden Leuchtdioden und blau leuchtenden Leuchtdioden kann nicht nur die Farbtemperatur des von der mindestens einen Leuchtstofflampe erzeugten weißen Lichts verändert werden, sondern zusätzlich auch die Farbe nahezu beliebig variiert werden, so dass das von der Leuchte ausgesandte Mischlicht nahezu jede gewünschte Farbe annehmen kann.

Vorteilhafterweise ist die mindestens eine Leuchtdiodenanordnung spaltfrei an der Außenseite des Lampengefäßes der mindestens einen Leuchtstofflampe angeordnet, um die Einkopplungsverluste des von den Leuchtdioden erzeugten Lichts in die mindestens eine Leuchtstofflampe möglichst gering zu halten.

Die mindestens eine Leuchtdiodenanordnung umfasst vorteilhafterweise mehrere Leuchtdioden, und besonders vorteilhaft mehrere der oben genannten Zweier- bzw. DreierKombinationen von rot und grün bzw. rot, grün und blau leuchtenden Leuchtdioden, um eine gleichmäßige Mischung des von den Leuchtdioden und der mindestens einen Leuchtstofflampe erzeugten Lichts zu ermöglichen. Vorzugsweise sind diese Leuchtdioden der mindestens einen Leuchtdiodenanordnung entlang der äußeren Oberfläche des Lampengefäßes der mindestens einen Leuchtstofflampe verteilt und zwischen dem vorgenannten Lampengefäß und einer Gehäusewand der Leuchte angeordnet.

Um die Lichteinkopplungsverluste weiter zu reduzieren weist die mindestens eine Leuchtdiodenanordnung vorteilhafterweise Lichteinkopplungsmittel auf, die zwischen den Leuchtdioden der mindestens einen Leuchtdiodenanordnung und dem Lampengefäß der mindestens einen Leuchtstofflampe angeordnet sind. Vorzugsweise handelt es sich bei dem Lichteinkopplungsmittel um einen farblosen, lichtdurchlässigen Silikonkautschuk, der als Verbindungsmedium zwischen den Leuchtdioden und dem Lampengefäß dient.

Vorteilhafterweise weist die erfindungsgemäße Leuchte mindestens einen Reflektor auf, der in dem Strahlengang des von der mindestens einen Leuchtdiodenanordnung ausgesandten Lichts angeordnet ist. Dadurch wird der Weg, den das von den Leuchtdioden emittierten Lichts in der mindestens einen Leuchtstofflampe zurücklegen muss, verlängert und eine dementsprechend homogenere Mischung mit dem Licht der Leuchtstofflampe erreicht.

Vorteilhafterweise ist der vorgenannte mindestens eine Reflektor zwischen der mindestens einen Leuchtstofflampe und einer Lichtaustrittsöffnung angeordnet, um auch den Weg des von der mindestens einen Leuchtstofflampe erzeugten Lichts in der Leuchte zu verlängern und so eine weitere Verbesserung der Durchmischung des von den unterschiedlichen Lichtquellen erzeugten Lichts zu gewährleisten.

Der mindestens eine Reflektor ist vorzugsweise als Licht reflektierende Beschichtung auf dem Lampengefäß der mindestens einen Leuchtstofflampe ausgebildet. Dadurch kann auf einfache Weise ein Reflektor geschaffen werden, der den Anforderungen in den beiden vorstehenden Absätzen genügt.

Die erfindungsgemäße Leuchte besitzt vorteilhafterweise ein Gehäuse, in dem die mindestens eine Leuchtstofflampe und die mindestens eine Leuchtdiodenanordnung angeordnet sind, und zumindest ein der Leichtaustrittsöffnung der Leuchte gegenüberliegender Innenwandbereich des Gehäuses ist Licht reflektierend ausgebildet, um eine effiziente Beleuchtung zu gewährleisten. Das Gehäuse kann vorteilhaft ferner zur Halterung und Kühlung der Lichtquellen sowie zur Aufnahme von elektrischen Betriebsmitteln für die Lichtquellen dienen.

Die Lichtaustrittsöffnung der erfindungsgemäßen Leuchte ist vorzugsweise mit einer lichtdurchlässigen, Licht streuende Abdeckung versehen, um die Durchmischung des von den unterschiedlichen Lichtquellen erzeugten Lichts weiter zu verbessern.

Die erfindungsgemäße Leuchte wird vorzugsweise zur Hinterleuchtung in LCD-Anzeigen (die Abkürzung LCD steht für Liquid-Crystal-Display) verwendet.

### II. Beschreibung des bevorzugten Ausführungsbeispiels

Nachstehend wird die Erfindung anhand eines bevorzugten Ausführungsbeispiels näher erläutert. Es zeigen:
- Figur 1: Einen Querschnitt durch das bevorzugte Ausführungsbeispiel der erfindungsgemäßen Leuchte in schematischer Darstellung
- Figur 2: Einen schematischen Längsschnitt durch eine aus einer Leuchtstofflampe und der ihr zugeordneten Leuchtdiodenanordnung bestehenden Baueinheit der in Figur 1 abgebildeten Leuchte
- Figur 3: Einen Querschnitt durch die in Figur 2 abgebildete Baueinheit
- Figur4: Eine Draufsicht auf eine Stirnseite der in Figur 2 und 3 dargestellten Baueinheit

Bei dem bevorzugten Ausführungsbeispiel der erfindungsgemäßen Leuchte handelt es sich um eine Hybridleuchte, die mehrere Leuchtstofflampen, vorzugsweise so genannte Heißkathodenlampen, die heizbare Elektrodenwendeln aufweisen, und an die Leuchtstofflampen gekoppelte Leuchtdiodenanordnungen als Lichtquellen besitzt und zur Hinterleuchtung von LCD-Anzeigen dient.

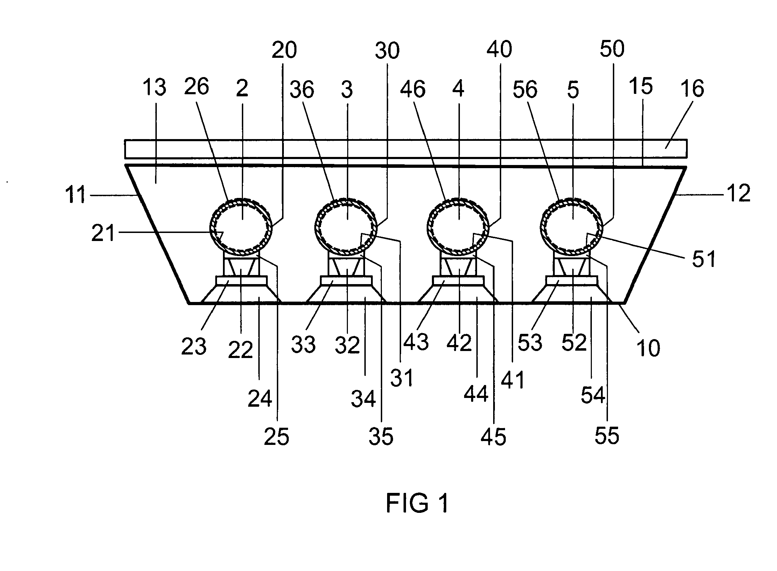

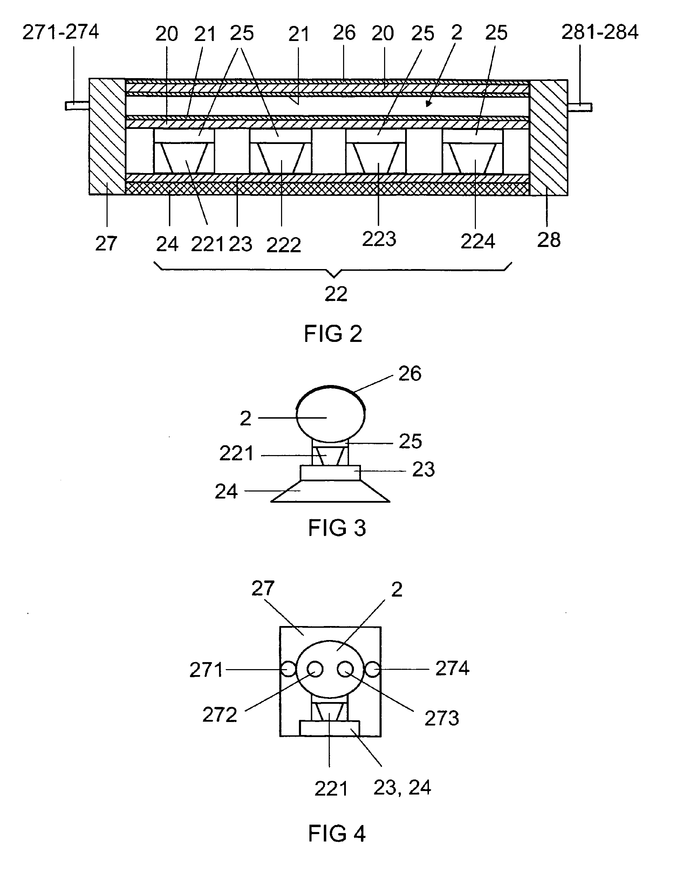

Diese Leuchte besitzt ein Gehäuse, beispielsweise aus Kunststoff, mit einer Rückwand 10, zwei Seitenwänden 11, 12 und zwei stirnseitigen Wänden 13 sowie einer Lichtaustrittsöffnung 15. Die Innenseiten der Seitenwände 11, 12 und der Rückwand 10 sind Licht reflektierend ausgebildet. Die Lichtaustrittsöffnung 15 ist mit einer lichtdurchlässigen, Licht streuenden Abdeckscheibe 16 und im Fall einer LCD-Hinterleuchtung mit dem Liquid-Crystal-Display versehen. Innerhalb des Gehäuses sind mehrere stabförmige Leuchtstofflampen 2, 3, 4, 5 angeordnet und parallel zur Längserstreckung der Leuchte ausgerichtet. In Figur 1 sind der Übersichtlichkeit halber nur vier Leuchtstofflampen schematisch dargestellt. Diese Leuchtstofflampen 2, 3, 4, 5 besitzen jeweils ein kreiszylindrisch, gläsernes Lampengefäß 20, 30, 40, 50, dessen Innenseite mit einer Leuchtstoffbeschichtung 21, 31, 41, 51 versehen ist, so dass jede der Leuchtstofflampen 2, 3, 4, 5 während des Betriebs weißes Licht mit einer Farbtemperatur von ca. 6000 Kelvin generiert. Die der Lichtaustrittsöffnung 15 zugewandte Oberseite der Lampengefäße 20, 30, 40, 50 der Leuchtstofflampen 2, 3, 4, 5 ist jeweils mit einer Licht reflektierenden Beschichtung 26, 36, 46, 56, beispielsweise einer dünnen Metallschicht, versehen. Zu jeder Leuchtstofflampe 2, 3, 4, 5 gehört eine Leuchtdiodenanordnung 22, 32, 42, 52, die optisch an das Lampengefäß 20, 30, 40, 50 der entsprechenden Leuchtstofflampe 2, 3, 4, 5 gekoppelt ist und jeweils aus mehreren Leuchtdioden bestehen. Die Leuchtdiodenanordnungen 22, 32, 42, 52 weisen jeweils eine Platine 23, 33, 43, 53 auf, auf denen die Leuchtdioden der jeweiligen Leuchtdiodenanordnung 22, 32, 42, 52 montiert und elektrisch kontaktiert sind. Die Platinen 23, 33, 43, 53 sind jeweils über einen metallischen Kühlkörper 24, 34, 44, 54 an der Innenseite der Gehäuserückwand 10 befestigt. Die Kühlkörper dienen zur Kühlung der Leuchtdioden der Leuchtdiodenanordnung 22, 32, 42, 52. Die Leuchtdioden der jeweiligen Leuchtdiodenanordnungen 22, 32, 42, 52 sind jeweils über eine farblose, lichtdurchlässige Silikonkautschukschicht 25, 35, 45, 55 mit der Außenseite des Lampengefäßes 20, 30, 40, 50 der entsprechenden Leuchtstofflampe 2, 3, 4, 5 spaltfrei verbunden. Nachstehend wird dieser Sachverhalt am Beispiel der Figuren 2 bis 4 und der Leuchtstofflampe 2 sowie der ihr zugeordneten Leuchtdiodenanordnung 22 näher erläutert.

Die Figur 2 zeigt einen durch die Leuchtstofflampe 2 und die ihr zugeordnete Leuchtdiodenanordnung 22 verlaufenden Längsschnitt. Die Leuchtdiodenanordnung 22 umfasst mehrere Leuchtdioden 221, 222, 223, 224, die äquidistant entlang der Längsrichtung der Leuchtstofflampe 2 angeordnet und mit der von der Lichtaustrittsöffnung 15 der Leuchte abgewandten Unterseite des Lampengefäßes 20 über eine farblose, lichtdurchlässige Silikonkautschukschicht 25, 35, 45, 55 verbunden sind. Der Übersichtlichkeit halber sind in der schematischen Figur 2 nur vier Leuchtdioden 221 bis 224 der Leuchtdiodenanordnung 22 abgebildet. Bei jeder der Leuchtdioden 221 bis 224 handelt es sich vorzugsweise um eine Kombination aus rot leuchtenden Leuchtdiodenchips mit grün leuchtenden Leuchtdiodenchips. Die Leuchtdioden 221 bis 224 der Leuchtdiodenanordnung sind auf der sich in Längsrichtung der Leuchtstofflampe 2 erstreckenden Platine 23 montiert und elektrisch kontaktiert. Die Leuchtstofflampe 2 weist an ihren Stirnseiten einen Sockel 27, 28 auf, der jeweils mit elektrischen Kontaktstiften 271, 272, 273, 274 bzw. 281 bis 284 ausgestattet ist. In Figur 4 sind zusätzlich auch die Leuchtstofflampe 2 und die Leuchtdiodenanordnung 22 sowie die Platine 23 und der Kühlkörper 24 dargestellt, obwohl diese Komponenten in der Ansicht der Figur 4 durch dien Sockel 27 verdeckt werden. Die beiden mittleren Kontaktstifte 272, 273 des Sockels 27 bzw. 28 dienen zur Energieversorgung der Leuchtstofflampe 2 und zu ihrer Helligkeitsregelung, während die beiden äußeren Kontaktstifte 271, 274 des Sockels 27 bzw. 28 zur Energieversorgung der zur Leuchtdiodenanordnung 22 gehörenden Leuchtdioden 221 bis 224 dienen. Handelt es sich bei den Leuchtdioden 221 bis 224 jeweils um Kombinationen von rot mit grün leuchtenden Leuchtdiodenchips, so werden beispielsweise über den Kontaktstift 271 am Sockel 27 und den dazu korrespondierenden Kontaktstift am anderen Sockel 28 die rot leuchtenden Leuchtdiodenchips mit Energie versorgt und die Helligkeit des von ihnen emittierten Lichts geregelt. Über den anderen Kontaktstift 274 sowie den dazu korrespondierenden Kontaktstift am anderen Sockel 28 werden beispielsweise die grün leuchtenden Leuchtdiodenchips mit Energie versorgt und die Helligkeit des von ihnen emittierten Lichts geregelt. Dadurch kann die Helligkeit des von der Leuchtstofflampe 2 und den roten sowie grünen Leuchtdiodenchips Lichts unabhängig voneinander geregelt werden. Die Farbtemperatur des von der Leuchtstofflampe 2 erzeugten weißen Lichts von ca. 6000 Kelvin kann durch Einstrahlen des von den roten und grünen Leuchtdiodenchips der einzelnen Leuchtdioden 221 bis 224 erzeugten Lichts in das Lampengefäß 20 der Leuchtstofflampe 2 und mittels Helligkeitsregelung der Lichtquellen 2, 221 bis 224 im Bereich von ca. 2700 Kelvin bis 6000 Kelvin eingestellt werden. Das Licht von den Leuchtdioden 221 bis 224 wird an der Leuchtstoffbeschichtung 21 auf der Innenseite des Lampengefäßes 20 gestreut und mit dem weißen, von der Leuchtstofflampe 2 generierten Licht gemischt. Die Reflektorschicht 26 auf der Oberseite des Lampengefäßes 20 reflektiert zumindest ein Teil des von den Lichtquellen 2, 221 bis 224 erzeugten Lichts, so dass dieses erst nach Reflexion an der Licht reflektierend ausgebildeten Innenseite der Rückwand 10 die Lichtaustrittsöffnung 15 passieren kann. Die Silikonkautschukschicht 25 der Leuchtdiodenanordnung 22 dient als Lichteinkopplungsmedium, um das von den Leuchtdioden 221 bis 224 generierte Licht möglichst vollständig in das Innere der Leuchtstofflampe 2 einzustrahlen.

Die anderen Leuchtstofflampen 3, 4, 5 und die ihnen zugeordneten Leuchtdiodenanordnungen 32, 42, 52 sowie Platinen 33, 43, 53 und Kühlkörper 34, 44, 54 sind identisch zu der oben näher erläuterten Leuchtstofflampe 2 und der Leuchtdiodenanordnung 22 sowie Platine 23 und Kühlkörper 24 ausgebildet.

Die Erfindung beschränkt sich nicht auf das oben näher erläuterte Ausführungsbeispiel. Wie bereits oben angedeutet, können die Leuchtdioden 221 bis 224 auch Kombinationen von rot, grün und blau leuchtenden Leuchtdiodenchips sein. In diesem Fall besitzt jeder Sockel 27, 28 der Leuchtstofflampe 2, und entsprechend auch die Sockel der anderen Leuchtstofflampen 3, 4, 5 jeweils noch einen weiteren Kontaktstift zur Energieversorgung und Helligkeitsregelung der blauen Leuchtdiodenchips. Durch die zusätzliche Verwendung von blauen Leuchtdiodenchips kann mittels der erfindungsgemäßen Leuchte nicht nur weißes Licht mit einer Farbtemperatur im Bereich von ca. 2700 Kelvin bis 6000 Kelvin erzeugt werden, sondern alternativ auch die Farbe des von der Leuchte ausgesandten Lichts nahezu beliebig variiert werden.

Außerdem kann die Licht reflektierende Schicht 26, 36, 46, 56 auf den Lampengefäßen der Leuchtstofflampen teilweise lichtdurchlässig ausgebildet sein.

## Patentansprüche

1. Leuchte mit mindestens einer Leuchtstofflampe (2) und mindestens einer Leuchtdiodenanordnung (22), wobei die mindestens eine Leuchtdiodenanordnung (22) optisch derart an die mindestens eine Leuchtstofflampe (2) gekoppelt ist, dass das von der mindestens einen Leuchtdiodenanordnung (22) erzeugte Licht in die mindestens eine Leuchtstofflampe (2) eingestrahlt wird, und wobei die Leuchte mindestens einen Reflektor (26) aufweist, der in dem Strahlengang des von der mindestens einen Leuchtdiodenanordnung (22) ausgesandten Lichts angeordnet ist, wobei die Leuchte ein Gehäuse (10, 11, 12, 13) mit Lichtaustrittsöffnung (15) aufweist, in dem die mindestens eine Leuchtstofflampe (2) und die mindestens eine Leuchtdiodenanordnung (22) angeordnet sind,
**dadurch gekennzeichnet, dass** der mindestens eine Reflektor (26) zwischen der mindestens einen Leuchtstofflampe (2) und der Lichtaustrittsöffnung (15) der Leuchte angeordnet ist.

2. Leuchte nach Anspruch 1, wobei die mindestens eine Leuchtdiodenanordnung (22) spaltfrei an der Außenseite des Lampengefäßes der mindestens einen Leuchtstofflampe angeordnet ist.

3. Leuchte nach Anspruch 1 oder 2, wobei die mindestens eine Leuchtdiodenanordnung (22) mehrere Leuchtdioden (221, 222, 223, 224) umfasst.

4. Leuchte nach einem oder mehreren der Ansprüche 1 bis 3, wobei die Leuchtdiodenanordnung (22) Lichteinkopplungsmittel (25) umfasst, die zwischen den Leuchtdioden (221, 222, 223, 224) und dem Lampengefäß (20) angeordnet sind.

5. Leuchte nach Anspruch 1, wobei der mindestens eine Reflektor als Licht reflektierende Beschichtung (26) auf dem Lampengefäß (20) der mindestens einen Leuchtstofflampe (2) ausgebildet ist.

6. Leuchte nach einem oder mehreren der Ansprüche 1 bis 5,
wobei ein der Lichtaustrittsöffnung (15) der Leuchte gegenüberliegender Innenwandbereich (10) des Gehäuses Licht reflektierend ausgebildet ist.

7. Leuchte nach einem oder mehreren der Ansprüche 1 bis 6, wobei die Lichtaustrittsöffnung (15) eine lichtdurchlässige, Licht streuende Abdeckung (16) aufweist.

8. Display-Hinterleuchtungsvorrichtung mit einer Leuchte gemäß einem oder mehreren der Ansprüche 1 bis 7.

## Claims

1. Luminaire with at least one fluorescent lamp (2) and at least one light-emitting diode arrangement (22), the at least one light-emitting diode arrangement (22) being coupled optically to the at least one fluorescent lamp (2) in such a way that the light generated by the at least one light-emitting diode arrangement (22) is radiated into the at least one fluorescent lamp (2), and the luminaire having at least one reflector (26), which is arranged in the beam path of the light emitted by the at least one light-emitting diode arrangement (22), the luminaire having a housing (10, 11, 12, 13) with a light exit opening (15), in which housing the at least one fluorescent lamp (2) and the at least one light-emitting diode arrangement (22) are arranged, **characterized in that** the at least one reflector (26) is arranged between the at least one fluorescent lamp (2) and the light exit opening (15) of the luminaire.

2. Luminaire according to Claim 1, the at least one light-emitting diode arrangement (22) being arranged, without a gap, on the outer side of the lamp vessel of the at least one fluorescent lamp.

3. Luminaire according to Claim 1 or 2, the at least one light-emitting diode arrangement (22) comprising a plurality of light-emitting diodes (221, 222, 223, 224).

4. Luminaire according to one or more of Claims 1 to 3, the light-emitting diode arrangement (22) comprising light input means (25), which are arranged between the light-emitting diodes (221, 222, 223, 224) and the lamp vessel (20).

5. Luminaire according to Claim 1, the at least one reflector being in the form of a light-reflective coating (26) on the lamp vessel (20) of the at least one fluorescent lamp (2).

6. Luminaire according to one or more of Claims 1 to 5, an inner wall region (10) of the housing, which inner wall region is opposite the light exit opening (15) of the luminaire, is formed so as to reflect light.

7. Luminaire according to one or more of Claims 1 to 6, the light exit opening (15) having a transparent, light-scattering cover (16).

8. Display backlighting device with a luminaire according to one or more of Claims 1 to 7.

## Revendications

1. Dispositif d'éclairage, comprenant au moins une lampe ( 2 ) fluorescente et au moins un dispositif ( 22 ) de diode électroluminescente, dans lequel le au moins un dispositif ( 22 ) de diode électroluminescente est couplé optiquement à la au moins une lampe ( 2 ) fluorescente, de façon à ce que la lumière produite par le au moins un dispositif ( 22 ) de diode électroluminescente entre dans la au moins une lampe ( 2 ) fluorescente et dans lequel le dispositif d'éclairage a au moins un réflecteur ( 26 ), qui est disposé dans le trajet du faisceau de la lumière émise par le au moins un dispositif ( 22 ) de diode électroluminescente, dans lequel le dispositif d'éclairage a un boîtier ( 10, 11, 12, 13 ), qui a une ouverture ( 15 ) de sortie de la lumière et dans lequel sont disposés la au moins une lampe ( 2 ) fluorescente et le au moins un dispositif ( 22 ) de diode électroluminescente,
**caractérisé en ce que** le au moins un réflecteur ( 26 ) est disposé entre la au moins une lampe ( 2 ) fluorescente et l'ouverture ( 15 ) de sortie de la lumière du dispositif d'éclairage.

2. Dispositif d'éclairage suivant la revendication 1, dans lequel le au moins un dispositif ( 22 ) de diode électroluminescente est disposé sans intervalle sur le côté extérieur de l'enceinte de la au moins une lampe fluorescente.

3. Dispositif d'éclairage suivant la revendication 1 ou 2, dans lequel le au moins un dispositif ( 22 ) de diode électroluminescente comprend plusieurs diodes ( 221, 222, 223, 224 ) électroluminescentes.

4. Dispositif d'éclairage suivant l'une ou plusieurs des revendications 1 à 3, dans lequel le dispositif ( 22 ) de diode électroluminescente comprend des moyens ( 25 ) d'injection de lumière, qui sont disposés entre les diodes ( 221, 222, 223, 224 ) électroluminescentes et l'enceinte ( 20 ) de la lampe.

5. Dispositif d'éclairage suivant la revendication 1, dans lequel le au moins un réflecteur est constitué sous la forme d'un revêtement ( 26 ) de l'enceinte ( 20 ) de la au moins une lampe ( 2 ) fluorescente, ce revêtement réfléchissant la lumière.

6. Dispositif d'éclairage suivant l'une ou plusieurs des revendications 1 à 5, dans lequel l'ouverture ( 15 ) de sortie de la lumière du dispositif d'éclairage est constitué de manière à réfléchir de la lumière sur la partie ( 10 ) de paroi intérieure opposée du boîtier.

7. Dispositif d'éclairage suivant l'une ou plusieurs des revendications 1 à 6, dans lequel l'ouverture ( 15 ) de sortie de la lumière comporte un recouvrement ( 16 ) perméable à la lumière et dispersant la lumière.

8. Dispositif d'éclairage par l'arrière d'un affichage, comprenant un dispositif d'éclairage suivant l'une ou plusieurs des revendications 1 à 7.
